# EUROPEAN PATENT SPECIFICATION

(11) **EP 2 900 941 B1**
(45) Date of publication and mention of the grant of the patent: **14.12.2016**
(21) Application number: 13842716.6
(22) Date of filing: 14.03.2013
(51) Int. Cl.: F02C 7/20, F02C 3/045, F01D 25/16, F01D 11/00, F01D 25/24

(54) **COMBINED HIGH PRESSURE TURBINE CASE AND TURBINE INTERMEDIATE CASE**
KOMBINATION AUS HOCHDRUCKTURBINENGEHÄUSE UND TURBINENZWISCHENGEHÄUSE
CARTER DE TURBINE HAUTE PRESSION ET CARTER INTERMÉDIAIRE DE TURBINE COMBINÉS

(30) Priority: 26.09.2012 US 201261705795 P
(43) Date of publication of application: 05.08.2015
(73) Proprietor: United Technologies Corporation, Farmington, CT 06032 (US)
(72) Inventor: PETTY, Dale William, Wallingford, Connecticut 06492 (US); BLUME, Karl D., Hebron, Connecticut 06248 (US); CAPRARIO, Joseph T., Cromwell, Connecticut 06416 (US); BAUER, Steven J., East Haddam, Connecticut 06423 (US)
(74) Representative: Leckey, David Herbert
(86) International application number: PCT/US2013/031125
(87) International publication number: WO 2014/051686

(56) References cited:
- EP-A2- 1 508 673
- EP-A2- 2 078 826
- EP-A2- 2 078 826
- WO-A1-2011/157962
- GB-A- 1 605 252
- US-A- 5 299 910
- US-A- 6 151 882
- US-A1- 2006 216 146
- US-A1- 2011 008 165
- US-A1- 2011 016 689
- US-A1- 2012 087 780
- US-B1- 6 439 842

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The engine includes multiple case structures that are attached together for define an overall engine static support structure. An interface between each case includes flanges on each case for a plurality of fasteners. Each flange requires specific structures to not only provide the desires structure, but also to prevent leakage. The structure at each flange adds weight to the overall engine and requires additional time during assembly.

Turbine engine manufacturers continue to seek further improvements to engine performance and assembly including improvements to thermal, transfer, assembly and propulsive efficiencies.

Example of gas turbine engine case structures are disclosed in US 2012/0087780 A1 and EP 2078826 A2.

### SUMMARY

The present invention provides a case for a gas turbine engine according to claim 1.

An embodiment of the foregoing case includes a turbine intermediate frame supported within the transition case portion.

In a further embodiment of any of the foregoing cases, the case includes at least one continuous uninterrupted outer surface that extends from the forward end to the aft end.

In a further embodiment of any of the foregoing cases, the turbine portion at least partially surrounds a high pressure turbine.

In a further embodiment of any of the foregoing cases, includes a mounting flange disposed about an outer surface of the case between the forward end and the aft end.

In a further embodiment of any of the foregoing cases, includes hooks within the turbine portion for supporting at least one blade outer seal assembly.

In a further embodiment of any of the foregoing cases, includes hooks for supporting at least one vane.

The invention also provides a gas turbine engine according to claim 8.

In a further embodiment of the foregoing gas turbine engine, the turbine portion surrounds the first turbine section and the aft turbine case surrounds the second turbine section.

The invention also provides a method of assembling a gas turbine engine according to claim 10.

An embodiment of the foregoing method includes configuring the outer case to include at least one continuous uninterrupted outer surface that extends from the forward end to the aft end.

An embodiment of any of the foregoing methods includes assembling a blade outer air seal assembly within the turbine portion of the outer case.

An embodiment of any of the foregoing methods includes assembling a bearing assembly into the outer case within the transition portion prior to attaching of the aft turbine case.

An embodiment of any of the foregoing methods includes defining a mounting flange for attaching accessory components on an outer surface of the outer case between the forward end and the aft end.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a perspective view of an example outer case.
Figure 3 is a cross-section of the example outer case and corresponding components mounting within the outer case.
Figure 4 is a cross-section showing a prior art case configuration.
Figure 5 is a cross-section of the example outer case in an initial assembly condition.
Figure 6 is another cross-section illustrating assembly of the outer case within the high pressure turbine section.
Figure 7 is a further cross-section illustrating assembly of an intermediate frame within the example outer case.
Figure 8 is a further cross-section illustrating the assembly of a bearing assembly within the example outer case.
Figure 9 is another cross-section illustrating the completed assembly of components within the example outer case.

### DESCRIPTION

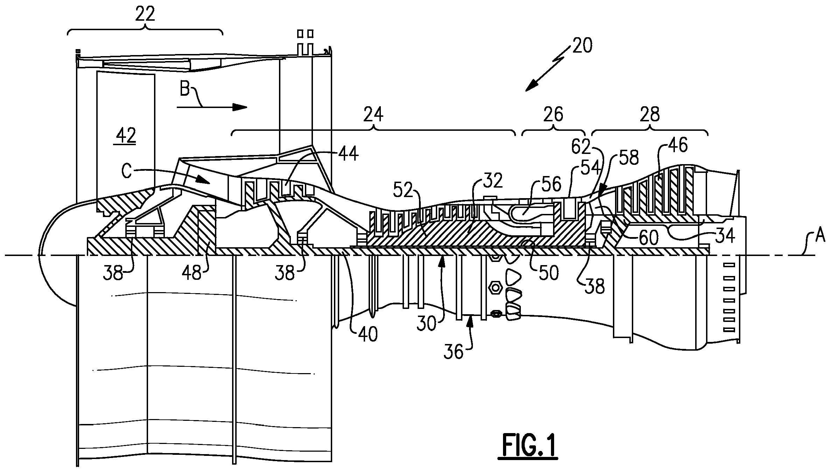

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a first spool 30 and a second spool 32 mounted for rotation about an engine central axis A relative to an engine static structure 36 via several bearing systems 38. It should be understood that various bearing systems 38 at various locations may alternatively or additionally be provided.

The first spool 30 generally includes a first shaft 40 that interconnects a fan 42, a first compressor 44 and a first turbine 46. The first turbine includes a plurality of rotors 34. The first shaft 40 is connected to the fan 42 through a gear assembly of a fan drive gear system 48 to drive the fan 42 at a lower speed than the first spool 30. The second spool 32 includes a second shaft 50 that interconnects a second compressor 52 and second turbine 54. The first spool 30 runs at a relatively lower pressure than the second spool 32. It is to be understood that "low pressure" and "high pressure" or variations thereof as used herein are relative terms indicating that the high pressure is greater than the low pressure. An annular combustor 56 is arranged between the second compressor 52 and the second turbine 54. The first shaft 40 and the second shaft 50 are concentric and rotate via bearing systems 38 about the engine central axis A which is collinear with their longitudinal axes.

Airflow through the core airflow path C is compressed by the first compressor 44 then the second compressor 52, mixed and burned with fuel in the annular combustor 56, then expanded over the second turbine 54 and first turbine 46. The first turbine 46 and the second turbine 54 rotationally drive, respectively, the first spool 30 and the second spool 32 in response to the expansion.

The engine 20 is a high-bypass geared aircraft engine that has a bypass ratio that is greater than about six (6), with an example embodiment being greater than ten (10), the gear assembly of the fan drive gear system 48 is an epicyclic gear train, such as a planetary gear system or other gear system, with a gear reduction ratio of greater than about 2.3:1 and the first turbine 46 has a pressure ratio that is greater than about 5. The first turbine 46 pressure ratio is pressure measured prior to inlet of first turbine 46 as related to the pressure at the outlet of the first turbine 46 prior to an exhaust nozzle. The first turbine 46 has a maximum rotor diameter and the fan 42 has a fan diameter such that a ratio of the maximum rotor diameter divided by the fan diameter is less than 0.6. It should be understood, however, that the above parameters are only exemplary.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 feet, with the engine at its best fuel consumption. To make an accurate comparison of fuel consumption between engines, fuel consumption is reduced to a common denominator, which is applicable to all types and sizes of turbojets and turbofans. The term is thrust specific fuel consumption, or TSFC. This is an engine's fuel consumption in pounds per hour divided by the net thrust. The result is the amount of fuel required to produce one pound of thrust. The TSFC unit is pounds per hour per pounds of thrust (lb/hr/lb Fn). When it is obvious that the reference is to a turbojet or turbofan engine, TSFC is often simply called specific fuel consumption, or SFC. "Low fan pressure ratio" is the pressure ratio across the fan blade alone, without a Fan Exit Guide Vane system. The low fan pressure ratio as disclosed herein according to one non-limiting embodiment is less than about 1.45. "Low corrected fan tip speed" is the actual fan tip speed in feet per second divided by an industry standard temperature correction of [(Tram °R) / (518.7 °R)] 0.5. The "Low corrected fan tip speed" as disclosed herein according to one non-limiting embodiment is less than about 1150 feet per second.

The engine 20 can include various case structures, around the turbine section 28 for example. A case can include multiple pieces that are connected at a flange. Case flanges add weight, are potential leak paths, are difficult to design in areas with large thermal gradients, (as in hot section case flanges) can decrease engine backbone stiffness, and can add assembly time for snap heating and bolt fastening. Removal of an engine flange can improve all the above.

The engine static structure 36 includes an outer case 62 that combines a high pressure turbine case and intermediate turbine case into one piece, thereby eliminating an engine flange. One or more rails are retained on the outer case 62 to provide a connection point for external bracket fastening for other components and to tune case stiffness.

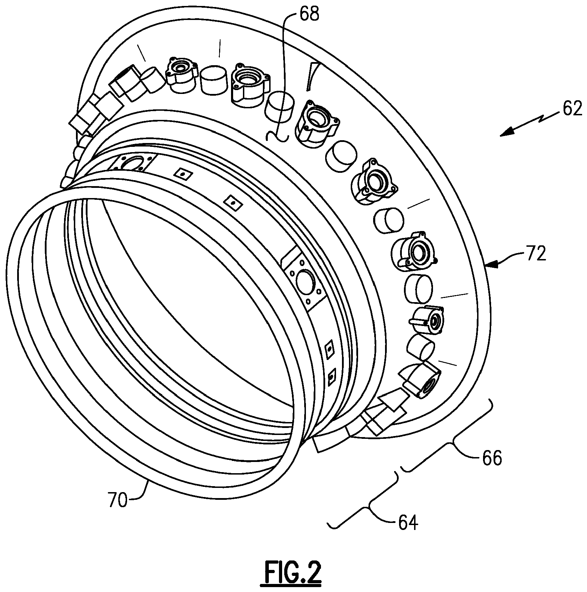

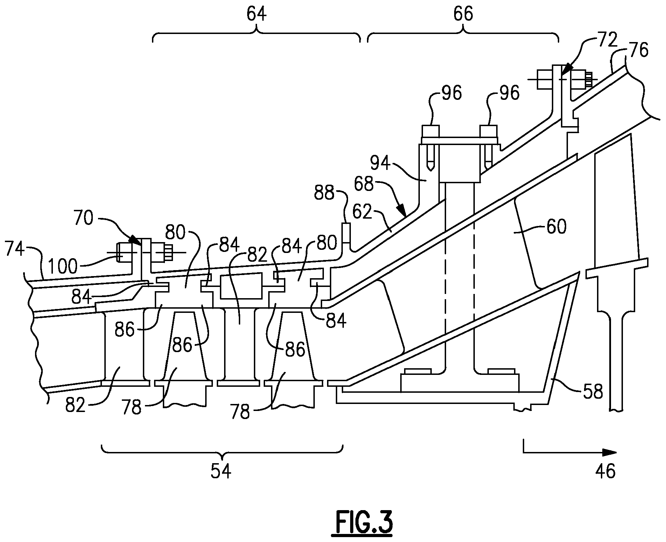

Referring to Figures 2 and 3, with continued reference to Figure 1, the example engine static structure 36 includes the outer case 62 that houses the high pressure turbine 54 and an intermediate turbine frame 58. The example outer case 62 is a single continuous unitary structure from a forward end 70 that is attachable to a combustor case 74 to an aft end 72 that is securable to an aft turbine case 76. An outer surface 68 of the outer case 62 extends uninterrupted from the forward end 70 to the aft end 72.

The example outer case 62 includes a turbine portion 64 that surrounds the high pressure turbine 54. The turbine portion 64 also includes features for supporting fixed structures of the high pressure turbine 54.

The outer case 62 also includes a transition portion 66 aft of the turbine portion 64 that surrounds and supports an intermediate turbine frame 58 including an airfoil 60 for directing air between the high pressure turbine 54 and the low pressure turbine 46.

In this example, the aft turbine case 76 houses the low pressure turbine 46. The turbine portion 64 of the outer case 62 houses the high pressure turbine 54 and features that correspond and utilize for operation of the high pressure turbine 54. The high pressure turbine 54 includes two (2) rotatable stages 78 and two (2) static stages or vanes 82. The outer case 62 includes hooks 84 to support blade outer air seal assemblies (BOAS) 80. The BOAS assemblies 80 are disposed radially out board of the rotating blades 78 of the high pressure turbine 54.

The hooks 84 are constructed for mounting not only the blade outer air seal assemblies 80 but also for mounting of the vanes 82. Each of the vanes 82 are supported on hooks 86 provided on the blade outer air seal assemblies 80.

The outer case 62 includes the single continuous surface 68 from the forward end 70 to the aft end 72. This single continuous surface defines a single monolithic structure including features for supporting and mounting components such as the BOAS assemblies 80 and the airfoil 60.

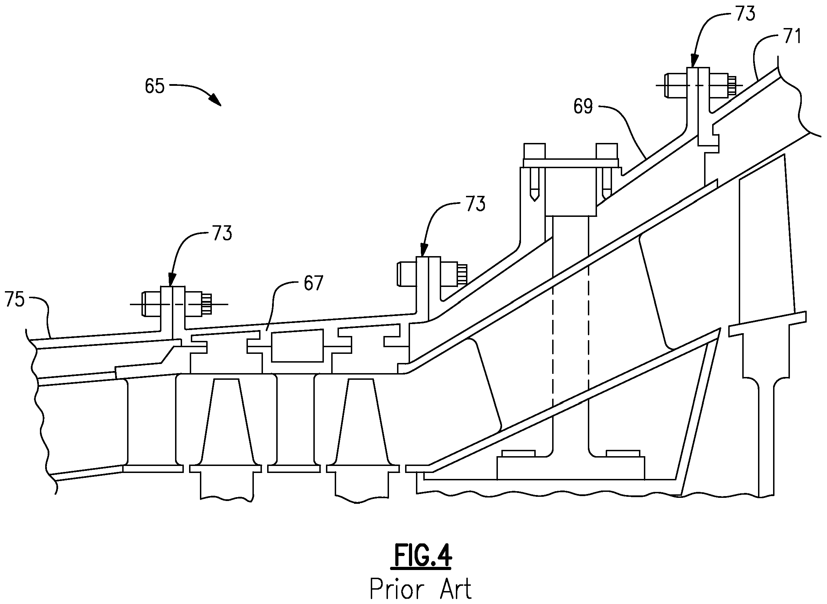

Referring to Figure 4, with continued reference to Figure 3, Figure 4 illustrates a prior art case assembly 65 that includes a combustor case 75, a high pressure turbine case 67, an intermediate case 69, and a low pressure turbine case 71. A flanged connection 73 is required between each of the individual cases. As appreciated, each flanged connection 73 requires a significant number of fasteners to provide the desired attachment and securement. Moreover, each flanged connection 73 complicates assembly of an engine and limits mounting space and locations for devices and components that are mounting to the external static structure of the engine assembly.

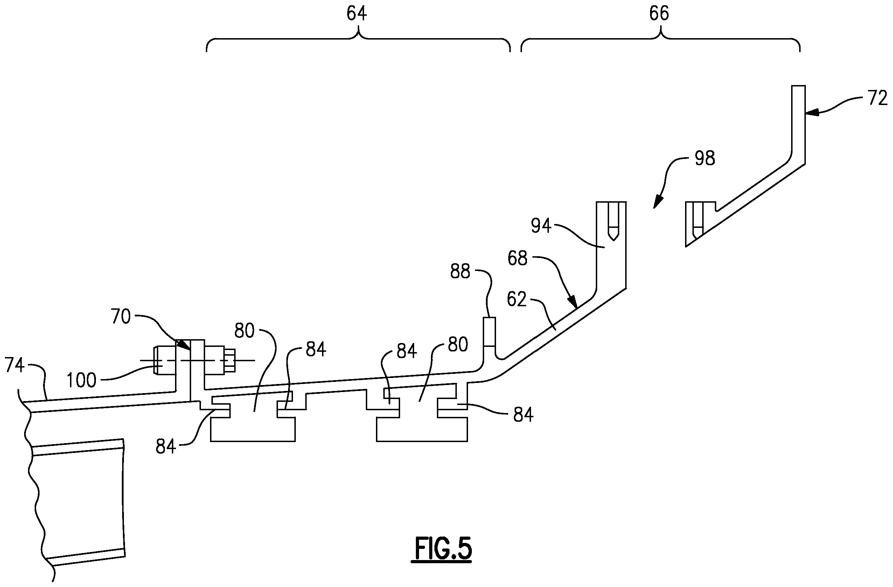

Referring to Figure 5, with continued reference to Figure 3, the example outer case 62 assembly starts by first installing the blade outer air seal assemblies 80 into the hooks 84. The hooks 84 are in integral feature of the outer case 62.

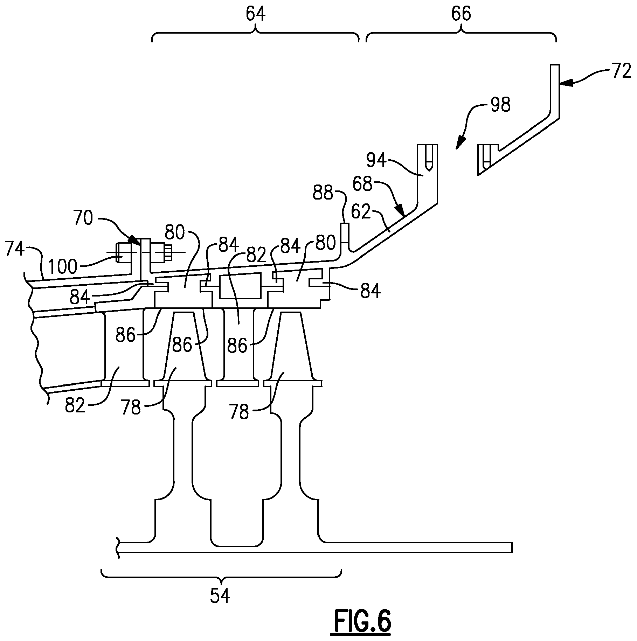

Referring to figure 6, with continued reference to Figure 5, once the blade outer air seal assemblies 80 are secured within the outer case 62, the high pressure turbine vanes 82 are installed. The vanes 82 are supported on hooks 86 defined on the blade outer air seal assemblies 80. After the vanes 82 are installed, the high pressure turbine 54 is installed. The outer case 62 assembly and high pressure turbine 54 are then assembled concurrently to the engine 20.

The outer case 62 is attached to the combustor case 74 at the forward end 70. The forward end 70 is a flange that is secured to the combustor case 74 with a plurality of fasteners 100 (only one shown here). The plurality of fasteners 100 are circumferentially spaced about the flanged connection between outer case 62 and the combustor case 74.

The outer case 62 includes an opening 98 and a corresponding boss 94 for securing the turbine intermediate frame 58.

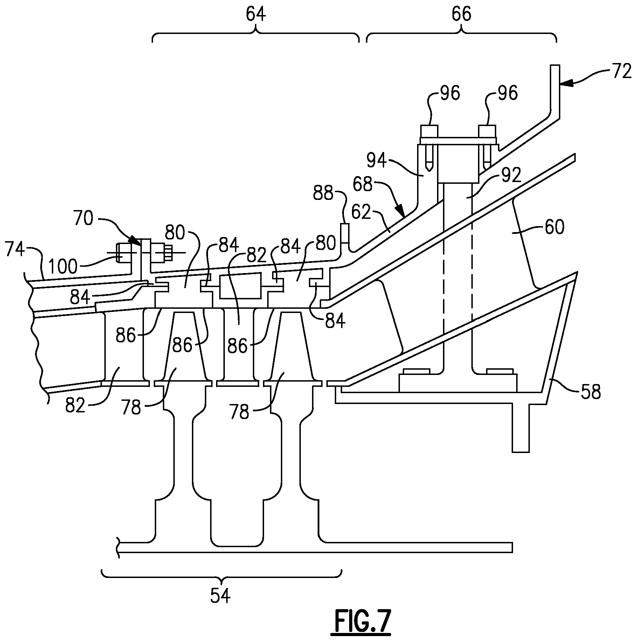

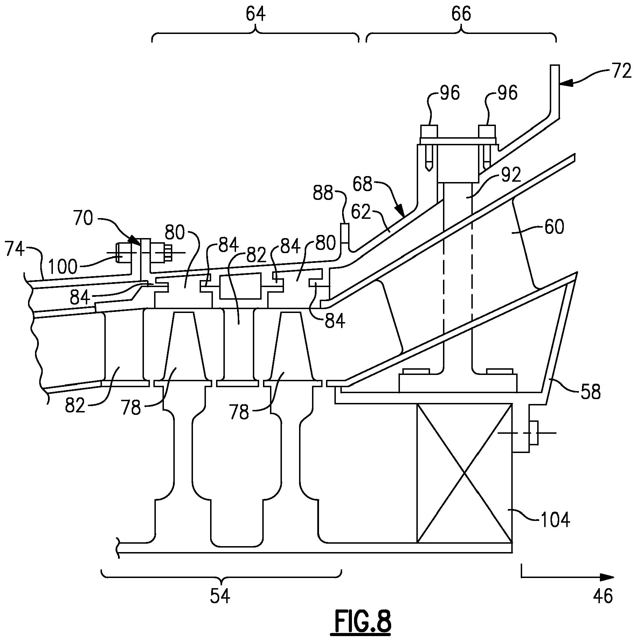

Referring to Figure 7, with continued reference to Figure 3, assembly of components within the outer case 62 continues with assembly of the turbine intermediate frame 58. The example turbine intermediate frame 58 includes a strut 92 that supports a bearing assembly (Figure 8) utilized to support the shafts 40 and 50 of the high and low spools. The support strut 92 extends through the opening 98 and is secured by way of fasteners 96 to the boss 94 defined on the outer surface 68 of the outer case 62.

The turbine intermediate frame 58 defines a transition duct between the high pressure turbine 54 and the low pressure turbine 46. The intermediate turbine frame 58 includes the airfoil 60 that conditions and directs airflow between the high pressure turbine 54 and the low pressure turbine 46. In this example, there are no flange connections between the combustor case 74 and the aft case 76 and therefore, assembly is substantially simplified. All that is required is assembly of the support strut 92 and the airfoil 60 within the transition portion 66 of the outer case 62.

As appreciated, some components are mounted to the outer case 62 and the elimination of a flange also eliminates an attachment point. The outer case 62 includes a flange 88 that extends upward transversely from the outer surface 68. The mounting flange 88 provides a location to which various components can be secured to the outer surface 68 of the outer case 62. The mounting flange 88 also adds rigidity to the outer case 62.

Referring to Figure 8, with continued reference to Figure 3, the bearing assembly 104 is installed after the turbine intermediate frame 58 is secured to the outer case 62. The bearing assembly 104 is secured to the turbine intermediate frame 58.

Although the example bearing assembly 104 is assembled as a separated component from turbine intermediate frame 58, it may also be assembled as a unit with the turbine intermediate frame 58.

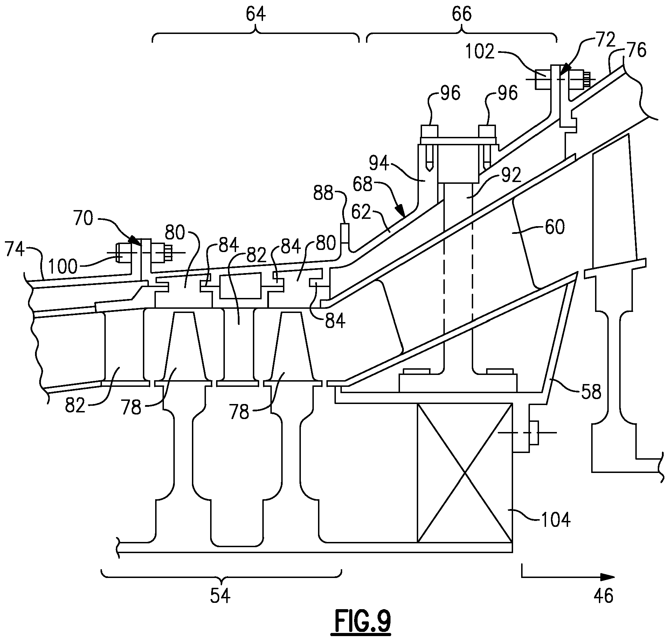

Referring to Figure 9, once the bearing assembly 104 is assembled, the aft turbine case 76 can be attached to the outer case 62. The aft turbine case 76 is assembled and secured by a plurality of fasteners 102. The fasteners 102 secure the aft case 76 to the outer case 62. In this example the aft turbine case 76 surrounds and circumscribes the low pressure turbine 46.

The elimination of a flange between the forward end 70 and the aft end 72 of the outer case 62 simplifies assembly, enables reduction of weight of the engine static structure 36, and reduces a potential air leakage path through the flange, without sacrificing structural stability. The example outer case 62 provides a one-piece continuous structure between the combustor case 74 and the aft turbine case 76 that simplifies assembly by eliminating an attachment point.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A case (62) for a gas turbine engine comprising:
a single unitary outer case (62);
**characterised by** the outer case (62) including a turbine portion (64) and a transition portion (66), the outer case (62) including a forward end (70) attachable to a combustor case (74) and an aft end (72) attachable to an aft turbine case (76).

2. The case as recited in claim 1, including a turbine intermediate frame (58) supported within the transition case portion (66).

3. The case as recited in claim 1 or 2, wherein the case (62) includes at least one continuous uninterrupted outer surface (68) that extends from the forward end (70) to the aft end (72).

4. The case as recited in any preceding claim, wherein the turbine portion (64) at least partially surrounds a high pressure turbine (54).

5. The case as recited in any preceding claim, including a mounting flange (88) disposed about an outer surface of the case (62) between the forward end (70) and the aft end (72).

6. The case as recited in any preceding claim, including hooks (84) within the turbine portion (64) for supporting at least one blade outer seal assembly (80).

7. The case as recited in claim 6, including hooks (80) for supporting at least one vane (82).

8. A gas turbine engine (20) comprising:
a compressor section (24) disposed within a combustor case (74);
a combustor section (26);
a first turbine section (54) and a second turbine section (46);
a case (62) as recited in any preceding claim; and
an aft turbine case (76), wherein the forward end (70) of the outer case (62) is attached to the combustor case (74) and the aft end (72) of the outer case (62) is attached to the aft turbine case (76).

9. The gas turbine engine as recited in claim 8, wherein the turbine portion (64) surrounds the first turbine section (54) and the aft turbine case (76) surrounds the second turbine section (46).

10. A method of assembling a gas turbine engine (20) comprising:
defining an outer case (62) as a single unitary structure that includes a turbine portion (64) for a first turbine (54) and a transition portion (66) for a turbine intermediate frame (58);
attaching a forward end (70) of the outer case (62) to a combustor case (74) such that the turbine portion (64) of the outer case (62) surrounds the first turbine (54);
assembling the turbine intermediate frame (58) into the transition portion (66) of the outer case (62); and
attaching an aft turbine case (76) to an aft end (72) of the outer case (62).

11. The method as recited in claim 10, including configuring the outer case (62) to include at least one continuous uninterrupted outer surface (68) that extends from the forward end (70) to the aft end (72).

12. The method as recited in claim 10 or 11, including assembling a blade outer air seal (80) assembly within the turbine portion (64) of the outer case (62).

13. The method as recited in claim 10, 11 or 12, including assembling a bearing assembly (104) into the outer case (62) within the transition portion (66) prior to attaching of the aft turbine case (76).

14. The method as recited in any of claims 10 to 13, including defining a mounting flange (88) for attaching accessory components on an outer surface of the outer case (62) between the forward end (70) and the aft end (72).

## Patentansprüche

1. Gehäuse (62) für ein Gasturbinentriebwerk, umfassend:
ein einzelnes einheitliches Außengehäuse (62);
**dadurch gekennzeichnet, dass** das Außengehäuse (62) einen Turbinenteil (64) und einen Übergangsteil (66) einschließt, wobei das Außengehäuse (62) ein vorderes Ende (70), das an einem Brennkammergehäuse (74) angebracht werden kann, und ein hinteres Ende (72) einschließt, das an einem hinteren Turbinengehäuse (76) angebracht werden kann.

2. Gehäuse nach Anspruch 1, das einen Turbinenzwischenrahmen (58) einschließt, der in dem Übergangsgehäuseteil (66) gestützt ist.

3. Gehäuse nach Anspruch 1 oder 2, wobei das Gehäuse (62) zumindest eine kontinuierliche ununterbrochene Außenfläche (68) einschließt, die sich von dem vorderen Ende (70) zu dem hinteren Ende (72) erstreckt.

4. Gehäuse nach einem der vorhergehenden Ansprüche, wobei der Turbinenteil (64) eine Hochdruckturbine (54) zumindest teilweise umgibt.

5. Gehäuse nach einem der vorhergehenden Ansprüche, das einen Befestigungsflansch (88) einschließt, der um eine Außenfläche des Gehäuses (62) zwischen dem vorderen Ende (70) und dem hinteren Ende (72) angeordnet ist.

6. Gehäuse nach einem der vorhergehenden Ansprüche, das Haken (84) in dem Turbinenteil (64) einschließt, um zumindest eine Schaufelaußendichtungsanordnung (80) zu stützen.

7. Gehäuse nach Anspruch 6, das Haken (80) zum Stützen von zumindest einer Schaufel (82) einschließt.

8. Gasturbinentriebwerk (20), umfassend:
einen Kompressorabschnitt (24), der in einem Brennkammergehäuse (74) angeordnet ist;
einen Brennkammerabschnitt (26);
einen ersten Turbinenabschnitt (54) und einen zweiten Turbinenabschnitt (46);
ein Gehäuse (62) nach einem der vorhergehenden Ansprüche; und
ein hinteres Turbinengehäuse (76), wobei das vordere Ende (70) des Außengehäuses (62) an dem Brennkammergehäuse (74) angebracht ist und das hinter Ende (72) des Außengehäuses (62) an dem hinteren Turbinengehäuse (76) angebracht ist.

9. Gasturbinentriebwerk nach Anspruch 8, wobei der Turbinenteil (64) den ersten Turbinenabschnitt (54) umgibt und das hintere Turbinengehäuse (76) den zweiten Turbinenabschnitt (46) umgibt.

10. Verfahren zum Montieren eines Gasturbinentriebwerks (20), umfassend:
Definieren eines Außengehäuses (62) als eine einzelne einheitliche Struktur, die einen Turbinenteil (64) für eine erste Turbine (54) und einen Übergangsteil (66) für einen Turbinenzwischenrahmen (58) einschließt;
Anbringen eines vorderen Endes (70) des Außengehäuses (62) an einem Brennkammergehäuse (74), sodass der Turbinenteil (64) des Außengehäuses (62) die erste Turbine (54) umgibt;
Montieren des Turbinenzwischenrahmens (58) in den Übergangsteil (66) des Außengehäuses (62); und
Anbringen eines hinteren Turbinengehäuses (76) an einem hinteren Ende (72) des Außengehäuses (62).

11. Verfahren nach Anspruch 10, das das Konfigurieren des Außengehäuses (62) einschließt, um zumindest eine kontinuierliche ununterbrochene Außenfläche (68) einzuschließen, die sich von dem vorderen Ende (70) zu dem hinteren Ende (72) erstreckt.

12. Verfahren nach Anspruch 10 oder 11, das das Montieren einer Schaufelaußendichtungsanordnung (80) in dem Turbinenteil (64) des Außengehäuses (62) einschließt.

13. Verfahren nach Anspruch 10, 11 oder 12, das das Montieren einer Lageranordnung (104) in das Außengehäuse (62) in dem Übergangsteil (66) vor dem Anbringen des hinteren Turbinengehäuses (76) einschließt.

14. Verfahren nach einem der Ansprüche 10 bis 13, das das Definieren eines Befestigungsflansches (88) zum Anbringen von Zubehörkomponenten an einer Außenfläche des Außengehäuses (62) zwischen dem vorderen Ende (70) und dem hinteren Ende (72) einschließt.

## Revendications

1. Carter (62) pour un moteur de turbine à gaz comprenant :
un seul carter extérieur unitaire (62) ;
**caractérisé en ce que** le carter extérieur (62) inclut une partie de turbine (64) et une partie de transition (66),
le carter extérieur (62) incluant une extrémité avant (70) attachable à un carter de brûleur (74) et une extrémité arrière (72) attachable à un carter de turbine arrière (76).

2. Carter selon la revendication 1, incluant un cadre intermédiaire de turbine (58) supporté dans la partie de carter de transition (66).

3. Carter selon la revendication 1 ou 2, dans lequel le carter (62) comprend au moins une surface extérieure ininterrompue continue (68) qui s'étend depuis l'extrémité avant (70) à l'extrémité arrière (72).

4. Carter selon une quelconque revendication précédente, dans lequel la partie de turbine (64) entoure au moins en partie une turbine haute pression (54).

5. Carter selon une quelconque revendication précédente, incluant une bride de montage (88) agencée autour d'une surface extérieure du carter (62) entre l'extrémité avant (70) et l'extrémité arrière (72).

6. Carter selon une quelconque revendication précédente, incluant des crochets (84) dans la partie de turbine (64) pour supporter au moins un ensemble de joint extérieur de pale (80).

7. Carter selon la revendication 6, incluant des crochets (80) pour supporter au moins une palette (82).

8. Moteur de turbine à gaz (20) comprenant :
une section de compresseur (24) agencée dans un carter de brûleur (74) ;
une section de brûleur (26) ;
une première section de turbine (54) et une seconde section de turbine (46) ;
un carter (62) selon une quelconque revendication précédente ; et
un carter de turbine arrière (76), dans lequel l'extrémité avant (70) du carter extérieur (62) est attachée au carter de brûleur (74) et l'extrémité arrière (72) du carter extérieur (62) est attachée au carter de turbine arrière (76).

9. Moteur de turbine à gaz selon la revendication 8, dans lequel la partie de turbine (64) entoure la première section de turbine (54) et le carter de turbine arrière (76) entoure la seconde section de turbine (46).

10. Procédé d'assemblage d'un moteur de turbine à gaz (20) comprenant :
la définition d'un carter extérieur (62) comme seule structure unitaire qui comporte une partie de turbine (64) pour une première turbine (54) et une partie de transition (66) pour un cadre intermédiaire de turbine (58) ;
l'attache d'une extrémité avant (70) du carter extérieur (62) à un carter de brûleur (74) de sorte que la partie de turbine (64) du carter extérieur (62) entoure la première turbine (54) ;
l'assemblage du cadre intermédiaire de turbine (58) dans la partie de transition (66) du carter extérieur (62) ;
et
l'attache d'un carter de turbine arrière (76) à une extrémité arrière (72) du carter extérieur (62).

11. Procédé selon la revendication 10, comprenant la configuration du carter extérieur (62) pour inclure au moins une surface extérieure ininterrompue (68) qui s'étend de l'extrémité avant (70) à l'extrémité arrière (72) .

12. Procédé selon la revendication 10 ou 11, comprenant l'assemblage d'un ensemble de joint d'air extérieur de pale (80) dans la partie de turbine (64) du carter extérieur (62).

13. Procédé selon la revendication 10, 11 ou 12, comprenant l'assemblage d'un ensemble de palier (104) dans le carter extérieur (62) dans la partie de transition (66) avant l'attache au carter de turbine arrière (76).

14. Procédé selon l'une quelconque des revendications 10 à 13, comprenant la définition d'une bride de montage (88) pour l'attache de composants accessoires sur une surface extérieure du carter extérieur (62) entre l'extrémité avant (70) et l'extrémité arrière (72).
